# EUROPEAN PATENT APPLICATION

(11) **EP 4 851 569 A1**
(43) Date of publication of application: **09.12.2026**
(21) Application number: 25748995.5
(22) Date of filing: 24.01.2025
(51) Int. Cl.: F28D 1/04, F28D 1/047, F28F 27/02, H01M 10/6568, F28D 1/053, B23P 15/26, B21D 53/06, B21D 53/02, F28D 21/00

(54) **HEAT EXCHANGER, METHOD OF MANUFACTURING THE HEAT EXCHANGER, AND DEVICE INCLUDING THE HEAT EXCHANGER**

(30) Priority: 30.01.2024 KR 20240014244; 25.07.2024 KR 20240098333; 20.08.2024 KR 20240111580; 23.10.2024 KR 20240145727
(71) Applicant: Park, Bumyong, Suwon-si Gyeonggi-do 16552 (KR); Park, Jisu, Suwon-si, Gyeonggi-do 16552 (KR)
(72) Inventor: Park, Bumyong, Suwon-si Gyeonggi-do 16552 (KR); Park, Jisu, Suwon-si, Gyeonggi-do 16552 (KR)
(74) Representative: Casalonga
(86) International application number: PCT/KR2025/001404
(87) International publication number: WO 2025/165091

(57) **Abstract**

Disclosed are a heat exchanger, a method of manufacturing the heat exchanger, and a device including the heat exchanger. The disclosed heat exchanger at least one heat exchange channel that performs heat exchange with a heat exchange target object in a predetermined heat exchange region
at least one heat exchange channel that performs heat exchange with a heat exchange target object in a predetermined heat exchange region, wherein a thermal resistance between the at least one heat exchange channel and the heat exchange target object in a first region of the heat exchange region is different from a thermal resistance between the at least one heat exchange channel and the heat exchange target object in a second region of the heat exchange region.

## Description

### TECHNICAL FIELD

The present invention relates to a heat exchanger, a method of manufacturing the heat exchanger, and a device including the heat exchanger.

### BACKGROUND ART

A battery pack of an electric vehicle, a central processing unit (CPU) of a computer device, a graphic processing unit (GPU), and the like inevitably generate a large amount of heat because they consume a large amount of power. A heat exchanger can play a key role in maintaining an optimal operating temperature of various devices, such as a battery, a power/electronic device, an electric motor (i.e., a motor), and the like. The performance and lifespan of a battery of an electric vehicle, an electronic device of a computer, and the like are highly dependent on efficient thermal management, and a heat exchanger can play an important role in such thermal management.

One of the important considerations in the design of a heat exchanger is to improve the uniformity of heat distribution. Non-uniform cooling may generate a hot spot, which may adversely affect the performance and durability of components of various devices, including a battery (for example, a lithium-ion battery) of an electric vehicle (EV). Accordingly, there is a demand for a heat exchanger technology capable of achieving uniform heat distribution while enabling efficient heat exchange.

### DISCLOSURE OF INVENTION

### Technical Problem

A technical problem to be achieved by the present invention is to provide a heat exchanger capable of improving the uniformity of heat distribution and increasing the efficiency of heat exchange.

In addition, a technical problem to be achieved by the present invention is to provide a heat exchanger capable of increasing space efficiency and maximizing heat exchange performance with respect to a heat exchange target object (as a non-limiting example, a battery) in a flat type.

In addition, a technical problem to be achieved by the present invention is to allow a flow path resistance to be uniformly applied by allowing a heat transfer fluid to pass through a flow path of the same length regardless of which heat exchange channel the heat transfer fluid passes through.

In addition, a technical problem to be achieved by the present invention is to provide a heat exchanger that can be easily manufactured at a relatively low manufacturing cost.

In addition, a technical problem to be achieved by the present invention is to provide a method of manufacturing the above-described heat exchanger.

In addition, a technical problem to be achieved by the present invention is to provide a device including the above-described heat exchanger.

The problems to be solved by the present invention are not limited to the problems mentioned above, and other problems not mentioned will be clearly understood by those skilled in the art from the following description.

### Advantageous Effects of Invention

According to an embodiment of the present invention, a heat exchanger capable of improving the uniformity of heat distribution and increasing the efficiency of heat exchange can be implemented. In addition, according to an embodiment of the present invention, a heat exchanger capable of increasing space efficiency and maximizing heat exchange performance with respect to a heat exchange target object (as a non-limiting example, a battery) in a flat type can be implemented. In addition, according to an embodiment of the present invention, a heat exchanger that can be easily manufactured at a relatively low manufacturing cost can be implemented.

According to an embodiment of the present invention, a heat transfer fluid introduced into an inlet channel portion may be branched into a plurality of heat exchange channels and then merged at an outlet channel portion. Even though the heat transfer fluid is branched into the plurality of heat exchange channels, the flow path length and the flow path resistance are applied uniformly, so that the amount of the heat transfer fluid passing through each of the branched heat exchange channels can be made uniform.

According to an embodiment of the present invention, by using heat exchange channels to which a close counterflow is applied, which can improve the uniformity of heat distribution, it is possible to overcome a problem that could not be solved by conventional heat exchange devices, that is, the difficult problem of securing thermal management uniformity for a heating element having a large area and generating heat uniformly, and to obtain the effect of optimizing the uniformity of heat exchange.

In the conventional art, uniform temperature management, which was only possible by providing a complex control system, such as various sensors and control actuators, in order to manage a heating element disposed over a large area at a uniform temperature, is made possible in an embodiment of the present invention with a single heat exchanger (for example, a cooler) that can be manufactured at low cost, thereby obtaining the effect of reducing management costs and lowering the initial investment cost of equipment.

According to an exemplary embodiment, when a double-sided cooling structure is applied for thermal management of a battery pack, the thermal resistance distance of a battery cell is halved compared to the application of a single-sided cooling structure, so that the maximum temperature can be lowered to, for example, about 60% level, and the maximum temperature and average temperature of each battery cell are mechanically managed uniformly, so that the thermal durability and lifespan of the battery pack can be extended, thermal runaway can be easily prevented, the energy efficiency of the battery pack can be improved, and the charging time of the battery pack can be shortened, thereby obtaining the effect of resolving inconvenience for users of an electric vehicle (EV).

In addition, when the heat exchanger according to the embodiment is applied, the reliability of the safety of an electrically-driven means of transportation (an electric vehicle, a motor-driven ship, a motor-driven aircraft, an electric bicycle, an electric wheel, an electric motorcycle, and the like) can be increased through highly reliable mechanical operation, so that it can act favorably on eco-friendly/energy policies and electric vehicle diffusion policies promoted by various countries.

Applying the heat exchanger according to the above-described embodiments can greatly improve the performance, durability, and safety of various devices.

However, the effects of the present invention are not limited to the above-described effects, and may be variously expanded without departing from the technical spirit and scope of the present invention.

### BRIEF DESCRIPTION OF DRAWINGS

FIG. 1 is a perspective view of a heat exchanger according to an embodiment of the present invention, as viewed from an upper surface side thereof.
FIG. 2 is a plan view of the heat exchanger according to the embodiment of FIG. 1.
FIG. 3 is a cross-sectional view taken along line A-A' of the heat exchanger of FIG. 2.
FIG. 4 is a cross-sectional view taken along line B-B' of the heat exchanger of FIG. 2.
FIG. 5 is a cross-sectional view taken along line C-C' of the heat exchanger of FIG. 3.
FIG. 6 is a cross-sectional view taken along line D-D' of the heat exchanger of FIG. 4.
FIGS. 7 and 8 illustrate cases in which flow path cross-sectional areas of a first connection channel portion, a second connection channel portion, a third connection channel portion, and a fourth connection channel portion change.
FIGS. 9 and 10 are perspective views showing a heat exchanger according to another embodiment of the present invention.
FIG. 11 is a perspective view of a heat exchanger according to an embodiment of the present invention, as viewed from below.
FIGS. 12 and 13 are perspective views showing a heat exchanger according to an exemplary embodiment of the present invention.
FIGS. 14 to 16 are perspective views showing a heat exchanger according to another embodiment of the present invention.
FIG. 17 is a cross-sectional view of the heat exchanger shown in FIGS. 14 to 16, as viewed from the front.
FIG. 18 is a flowchart showing a method of manufacturing the heat exchanger described with reference to FIGS. 1 to 17.
FIGS. 19 to 22 are views showing a process of forming a plurality of first heat exchange channels and a plurality of second heat exchange channels.
FIG. 23 is a view showing a heat exchanger according to an exemplary embodiment. FIG. 24 is a perspective view showing the heat exchanger shown in FIG. 23.
FIG. 25 is a view showing the heat exchanger shown in FIG. 23 and a cross-section (lower side) taken along line A-A' of the heat exchanger.
FIGS. 26 to 29 are views showing examples of adjusting thermal resistance.
FIG. 30 is a view showing a heat exchanger according to another exemplary embodiment.
FIG. 31 is a table summarizing examples in which thermal resistance is applied to various heat exchangers.

### BEST MODE FOR CARRYING OUT THE INVENTION

There is provided a heat exchanger that performs heat exchange using a flow of a heat transfer fluid. The heat exchanger includes at least one heat exchange channel that performs heat exchange with a heat exchange target object in a predetermined heat exchange region, wherein a thermal resistance between the at least one heat exchange channel and the heat exchange target object in a first region of the heat exchange region may be different from a thermal resistance between the at least one heat exchange channel and the heat exchange target object in a second region of the heat exchange region.

The heat exchanger may further include: a first port connection channel portion in which a first port through which the heat transfer fluid is injected is formed; a first connection channel portion extending from a first portion of the first port connection channel portion; a second connection channel portion extending from a second portion of the first port connection channel portion; a second port connection channel portion in which a second port through which the heat transfer fluid is discharged is formed; a third connection channel portion extending from a first portion of the second port connection channel portion; and a fourth connection channel portion extending from a second portion of the second port connection channel portion, wherein the at least one heat exchange channel includes a plurality of first heat exchange channels arranged to connect the first connection channel portion to any one of the third connection channel portion and the fourth connection channel portion, and a plurality of second heat exchange channels arranged to connect the second connection channel portion to the other one of the third connection channel portion and the fourth connection channel portion, wherein the first port connection channel portion is connected to first-side ends of the first connection channel portion and the second connection channel portion, and the second port connection channel portion is connected to second-side ends, different from the first side, of the third connection channel portion and the fourth connection channel portion.

The heat exchanger may further include a first rail channel and a second rail channel, wherein the at least one heat exchange channel is connected to the first rail channel and the second rail channel and includes channels having at least one of a "U" shape and a "W" shape, wherein a heat transfer fluid introduced from a port formed at one side of the first rail channel may be branched into the channels having at least one of the "U" shape and the "W" shape and then discharged through a port formed at the other side of the second rail channel.

The plurality of first heat exchange channels may connect between the first connection channel portion and the fourth connection channel portion, and the plurality of second heat exchange channels may connect between the second connection channel portion and the third connection channel portion.

At least some of the plurality of first heat exchange channels and at least some of the plurality of second heat exchange channels may be alternately arranged so as to be configured to provide a counterflow characteristic of the heat transfer fluid.

The heat transfer fluid introduced into the first connection channel portion may be branched into the plurality of first heat exchange channels and then merged at the fourth connection channel portion to be discharged through the second port, and the heat transfer fluid introduced into the second connection channel portion may be branched into the plurality of second heat exchange channels and then merged at the third connection channel portion to be discharged through the second port.

The plurality of first heat exchange channels may connect between the first connection channel portion and the third connection channel portion, and the plurality of second heat exchange channels may connect between the second connection channel portion and the fourth connection channel portion.

Each of the plurality of first heat exchange channels may have a "U"-shaped structure extending from the first connection channel portion and then bent to extend toward the third connection channel portion, and each of the plurality of second heat exchange channels may have a "U"-shaped structure extending from the second connection channel portion and then bent to extend toward the fourth connection channel portion.

The heat transfer fluid introduced into the first connection channel portion may be branched into the plurality of first heat exchange channels and then merged at the third connection channel portion to be discharged through the second port, and the heat transfer fluid introduced into the second connection channel portion may be branched into the plurality of second heat exchange channels and then merged at the fourth connection channel portion to be discharged through the second port.

The heat exchanger may further include: a plurality of third heat exchange channels arranged to connect the first connection channel portion to any one of the third connection channel portion and the fourth connection channel portion; and a plurality of fourth heat exchange channels arranged to connect the second connection channel portion to the other one of the third connection channel portion and the fourth connection channel portion, wherein the plurality of first heat exchange channels and the plurality of second heat exchange channels are arranged to define a first heat exchange region, and the plurality of third heat exchange channels and the plurality of fourth heat exchange channels are arranged to define a second heat exchange region at a position different from that of the first heat exchange channels, wherein a predetermined heat exchange target object may be disposed between the first heat exchange region and the second heat exchange region.

A flow path cross-sectional area of the first connection channel portion and the second connection channel portion may decrease from the first-side end toward the second-side end, and a flow path cross-sectional area of the third connection channel portion and the fourth connection channel portion may increase from the first-side end toward the second-side end.

An insulating material having a thermal resistance higher than that of the second region may be inserted in the first region.

A surface area of the at least one heat exchange channel in the first region may be smaller than a surface area thereof in the second region.

A thermal conductivity control member may be provided between the at least one heat exchange channel and the heat exchange target object, wherein the thermal conductivity control member may have a relatively high thermal resistance in the first region and a relatively low thermal resistance in the second region.

A thermal resistance between the at least one heat exchange channel and the heat exchange target object in the first region of the heat exchange region may be higher than a thermal resistance between the at least one heat exchange channel and the heat exchange target object in the second region of the heat exchange region, and the first region may be adjacent to a region into which the heat transfer fluid is introduced.

### MODE FOR CARRYING OUT THE INVENTION

Hereinafter, embodiments of the present invention will be described in detail with reference to the accompanying drawings.

The embodiments of the present invention described below are provided to more clearly explain the present invention to a person having ordinary skill in the art to which the present invention pertains, and the scope of the present invention is not limited by the following embodiments, and the following embodiments may be modified into various other forms.

The terms used herein are used to describe specific embodiments and are not intended to limit the present invention. As used herein, singular forms are intended to include plural forms as well, unless the context clearly indicates otherwise. In addition, the terms "comprise" and/or "comprising" used herein specify the presence of stated shapes, steps, numbers, operations, members, elements, and/or groups thereof, but do not exclude the presence or addition of one or more other shapes, steps, numbers, operations, members, elements, and/or groups thereof. In addition, the term "connection" as used herein means not only that certain members are directly connected, but also encompasses the concept of being indirectly connected with another member interposed therebetween.

In addition, in the present specification, when a certain member is referred to as being located "on" another member, this includes not only a case in which the certain member is in contact with the other member, but also a case in which another member exists between the two members. As used herein, the term "and/or" includes any one and all combinations of one or more of the associated listed items. In addition, terms of degree such as "about" and "substantially" as used herein are used at or close to the numerical value or degree, taking into account inherent manufacturing and material tolerances, and are used to prevent an unfair use by an infringer of the disclosure in which an exact or absolute numerical value is mentioned to aid understanding of the present application.

Hereinafter, embodiments of the present invention will be described in detail with reference to the accompanying drawings. The sizes or thicknesses of regions or parts shown in the accompanying drawings may be somewhat exaggerated for clarity of the specification and convenience of description. Throughout the detailed description, the same reference numerals denote the same components.

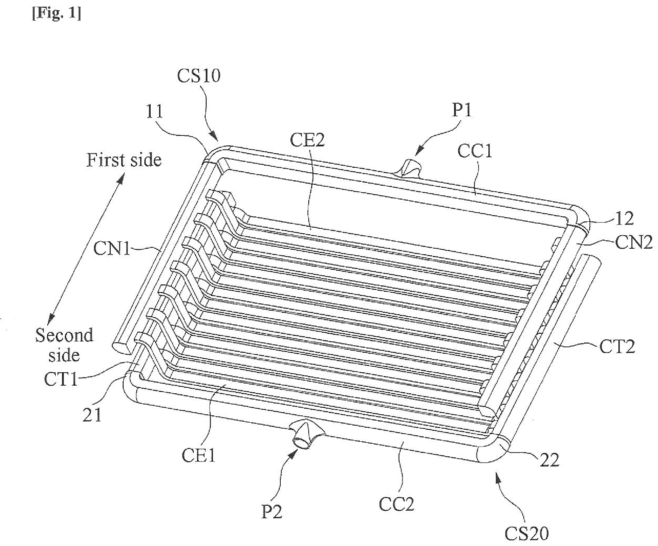

FIG. 1 is a perspective view of a heat exchanger according to an embodiment of the present invention, as viewed from an upper surface side thereof.

Referring to FIG. 1, the heat exchanger according to an embodiment of the present invention may be a device that performs heat exchange using a flow of a heat transfer fluid (heat exchange medium). The heat transfer fluid may be, for example, a cooling fluid, and the cooling fluid may be, for example, cooling water or cooling oil. Accordingly, the heat exchanger may be a kind of cooling device. The heat exchanger may be a device that performs cooling with respect to a predetermined heat-generating heat exchange target object (a kind of heating element). However, the specific type of the heat transfer fluid is not limited to the above description.

The heat exchanger may include a first channel structure CS10, a second channel structure CS20, and a plurality of heat exchange channels CE1 and CE2. The first channel structure CS10, the second channel structure CS20, and the plurality of heat exchange channels CE1 and CE2 are connected to each other and may have a pipe structure through which the heat transfer fluid flows.

The first channel structure CS10 may include a first port connection channel portion CC1 connected to a first port P1 corresponding to an inlet through which the heat transfer fluid is injected, and first and second connection channel portions CN1 and CN2 respectively extending from first and second portions of the first port connection channel portion CC1. The first port P1 may be an injection port.

The first port P1 may be formed in the first port connection channel portion CC1. The first and second connection channel portions CN1 and CN2 may respectively extend from both ends of the first port connection channel portion CC1. The first connection channel portion CN1 may be connected at a first portion 11 of the first port connection channel portion CC1. The first connection channel portion CN1 may extend from the first portion 11 of the first port connection channel portion CC1 in a second-side direction. The first port connection channel portion CC1 may be connected to a first-side end of the first connection channel portion CN1. The first port connection channel portion CC1 may be connected to a first-side end of the second connection channel portion CN2. The second connection channel portion CN2 may be connected at a second portion 12 of the first port connection channel portion CC1. The second connection channel portion CN2 may extend from the second portion 12 of the first port connection channel portion CC1 in the second-side direction.

The first and second connection channel portions CN1 and CN2 may be referred to as a kind of inlet rail channel portion. The first channel structure CS10 may be a pipe structure having a bent structure.

The second channel structure CS20 may include a second port connection channel portion CC2 connected to a second port (first port) P2 corresponding to an outlet through which the heat transfer fluid is discharged, and first and fourth connection channel portions CT1 and CT2 respectively extending from first and second portions of the second port connection channel portion CC2. The second port P2 may be a discharge port.

The second port P2 may be formed in the second port connection channel portion CC2. The first and fourth connection channel portions CT1 and CT2 may respectively extend from both ends of the second port connection channel portion CC2. The third connection channel portion CT1 may be connected at a first portion 21 of the second port connection channel portion CC2. The second port connection channel portion CC2 may be connected to a second-side end of the third connection channel portion CT1. The second port connection channel portion CC2 may be connected to a second-side end of the fourth connection channel portion CT2. The third connection channel portion CT1 may extend from the first portion 21 of the second port connection channel portion CC2 in a first-side direction. The fourth connection channel portion CT2 may be connected at a second portion 22 of the second port connection channel portion CC2. The fourth connection channel portion CT2 may extend from the second portion 22 of the second port connection channel portion CC2 in the first-side direction.

The first-side direction and the second-side direction may be determined by the positions of the first port P1 and the second port P2. The first-side direction may be the same as or similar to a direction viewed from the second port P2 toward the first port P1, and the second-side direction may be the same as or similar to a direction viewed from the first port P1 toward the second port P2.

The first and fourth connection channel portions CT1 and CT2 may be referred to as a kind of outlet rail channel portion. The second channel structure CS20 may be a pipe structure having a bent structure.

The plane on which the second port connection channel portion CC2 and the first and fourth connection channel portions CT1 and CT2 are disposed may be different from the plane on which the first port connection channel portion CC1 and the first and second connection channel portions CN1 and CN2 are disposed. For example, the second port connection channel portion CC2 and the first and fourth connection channel portions CT1 and CT2 may be disposed at a lower position (height) than the first port connection channel portion CC1 and the first and second connection channel portions CN1 and CN2.

The second channel structure CS20 and the first channel structure CS10 may be disposed at different positions. For example, it may be disposed at a lower position (height) than the first channel structure CS10. The first channel structure CS10 may be disposed horizontally or substantially horizontally, and the second channel structure CS20 may also be disposed horizontally or substantially horizontally, wherein the second channel structure CS20 may be disposed at a lower position (height) than the first channel structure CS10. In addition, the third connection channel portion CT1 may be disposed closer to the first connection channel portion CN1 than to the second connection channel portion CN2, and the fourth connection channel portion CT2 may be disposed closer to the second connection channel portion CN2 than to the first connection channel portion CN1.

The heat exchanger may include a plurality of first heat exchange channels CE1 arranged to connect any one of the third connection channel portion CT1 and the fourth connection channel portion CT2 to the first connection channel portion CN1. The heat exchanger may include a plurality of second heat exchange channels CE2 arranged to connect the other one of the third connection channel portion CT1 and the fourth connection channel portion CT2 to the second connection channel portion CN2.

FIGS. 1 to 11 relate to an embodiment in which the plurality of first heat exchange channels CE1 connect between the first connection channel portion CE1 and the fourth connection channel portion CT2, and the plurality of second heat exchange channels CE2 connect between the second connection channel portion CN2 and the third connection channel portion CT1.

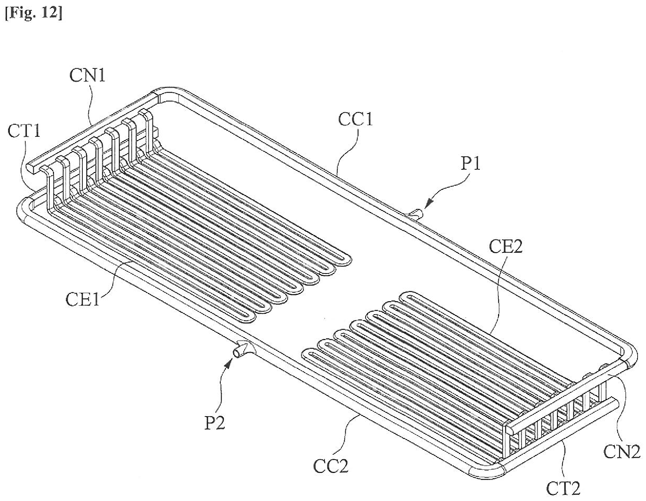

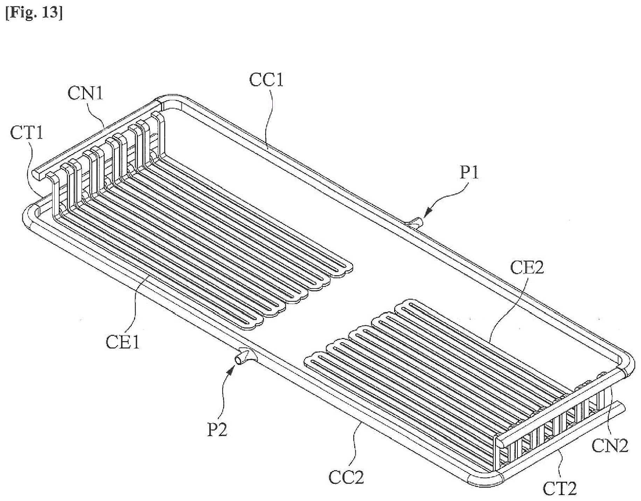

FIGS. 12 and 13 relate to an embodiment in which the plurality of first heat exchange channels CE1 connect between the first connection channel portion CE1 and the third connection channel portion CT1, and the plurality of second heat exchange channels CE2 connect between the second connection channel portion CN2 and the fourth connection channel portion CT2.

Referring to FIG. 1, the heat exchanger may include a plurality of first heat exchange channels CE1 arranged to connect the first connection channel portion CN1 and the fourth connection channel portion CT2, and a plurality of second heat exchange channels CE2 arranged to connect the second connection channel portion CN2 and the third connection channel portion CT1. At least some of the plurality of first heat exchange channels CE1 and at least some of the plurality of second heat exchange channels CE2 may be alternately arranged so as to be configured to provide a counterflow characteristic of the heat transfer fluid. The plurality of first heat exchange channels CE1 and the plurality of second heat exchange channels CE2 may be alternately arranged along the longitudinal direction (extension direction) of the first and fourth connection channel portions CT1 and CT2. In addition, the plurality of first heat exchange channels CE1 and the plurality of second heat exchange channels CE2 may be alternately arranged along the longitudinal direction (extension direction) of the first and second connection channel portions CN1 and CN2. A main region (most of the region) of the plurality of first heat exchange channels CE1 and a main region (most of the region) of the plurality of second heat exchange channels CE2 may be arranged side by side and alternately on one plane. The plurality of first heat exchange channels CE1 and the plurality of second heat exchange channels CE2 may be arranged to provide a planar heat exchange region.

The first and second heat exchange channels CE1 and CE2 may be effective heat exchange channels that substantially generate heat exchange. Through the first heat exchange channel CE1, the heat transfer fluid may flow in a first direction from the first connection channel portion CN1 toward the fourth connection channel portion CT2, and through the second heat exchange channel CE2, the heat transfer fluid may flow in a second direction from the second connection channel portion CN2 toward the third connection channel portion CT1. The first direction and the second direction may be opposite to each other. Accordingly, the first and second heat exchange channels CE1 and CE2, which are alternately and repeatedly arranged, may provide a counterflow characteristic in which the heat transfer fluid flows in opposite directions in adjacent heat exchange channels.

According to an embodiment, in the first channel structure CS10, the first port connection channel portion CC1 and the first and second connection channel portions CN1 and CN2 may form a first " 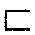 "-shaped (bracket-shaped) structure. In addition, in the second channel structure CS20, the second port connection channel portion CC2 and the first and fourth connection channel portions CT1 and CT2 may form a second " 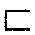 "-shaped (bracket-shaped) structure. The first channel structure CS10 may be disposed above the second channel structure CS20.

According to an embodiment, the first " 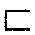 "-shaped (bracket-shaped) structure may have an arrangement direction rotated by about 180° with respect to the second " 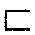 "-shaped (bracket-shaped) structure. That is, the open portion of the " 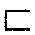 "-shaped (bracket-shaped) structure of the first channel structure CS10 and the open portion of the " 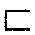 "-shaped (bracket-shaped) structure of the second channel structure CS20 may be disposed on opposite sides of each other. In this case, the first port P1 and the second port P2 may be disposed on opposite sides of each other. When viewed from above, the plurality of first heat exchange channels CE1 and the plurality of second heat exchange channels CE2 may be disposed between the first port P1 and the second port P2.

According to an embodiment, the first connection channel portion CN1 may be disposed directly above or adjacent to the third connection channel portion CT1, and the second connection channel portion CN2 may be disposed directly above or adjacent to the fourth connection channel portion CT2. In other words, the third connection channel portion CT1 may be disposed directly below or adjacent to the first connection channel portion CN1, and the fourth connection channel portion CT2 may be disposed directly below or adjacent to the second connection channel portion CN2. When viewed from above, the first connection channel portion CN1 and the third connection channel portion CT1 may be disposed on the same vertical line. In addition, when viewed from above, the second connection channel portion CN2 and the fourth connection channel portion CT2 may be disposed on the same vertical line. However, in some cases, when viewed from above, the first connection channel portion CN1 and the third connection channel portion CT1 may not be disposed on the same vertical line, but may be disposed to be horizontally offset from each other. Similarly, when viewed from above, the second connection channel portion CN2 and the fourth connection channel portion CT2 may also not be disposed on the same vertical line, but may be disposed to be horizontally offset from each other.

According to an embodiment, the heat exchanger may be configured to provide a planar heat exchange region. Accordingly, the heat exchanger may be a kind of planar heat exchanger. For example, the plurality of first heat exchange channels CE1 and the plurality of second heat exchange channels CE2 may have a pipe structure in which at least one of an upper surface and a lower surface is flat (substantially flat), and the plurality of first heat exchange channels CE1 and the plurality of second heat exchange channels CE2 may be arranged to extend adjacent to and side by side with each other to provide a flat heat exchange region.

In the present embodiment, the plurality of first heat exchange channels CE1 and the plurality of second heat exchange channels CE2 may have a structure that is bent downward and extends with respect to the first channel structure CS10. In this case, a heat exchange region may be defined at the upper surface portions of the plurality of first heat exchange channels CE1 and the plurality of second heat exchange channels CE2, and the heat exchange region may perform heat exchange with respect to a lower surface of the heat exchange target object. A predetermined heat exchange target object may be disposed on the heat exchange region, and heat exchange may occur at the lower surface of the heat exchange target object. Accordingly, the heat exchanger of FIG. 1 may be a device for lower-surface heat exchange.

In an embodiment of the present invention, the heat exchange target object may include, as a non-limiting example, a battery. The battery may include a battery cell, a battery module, or a battery pack. The battery may have an at least partially planar structure. The battery may be applied to an electrically-driven means of transportation (an electric vehicle, a motor-driven ship, a motor-driven aircraft, an electric bicycle, an electric wheel, an electric motorcycle, and the like), or may have other uses. However, the type of the heat exchange target object is not limited to a battery, and may be variously changed depending on the case. For example, the heat exchange target object may include a device such as a CPU, a GPU, or the like of a computer device, or other power/electronic devices or an electric motor (i.e., a motor).

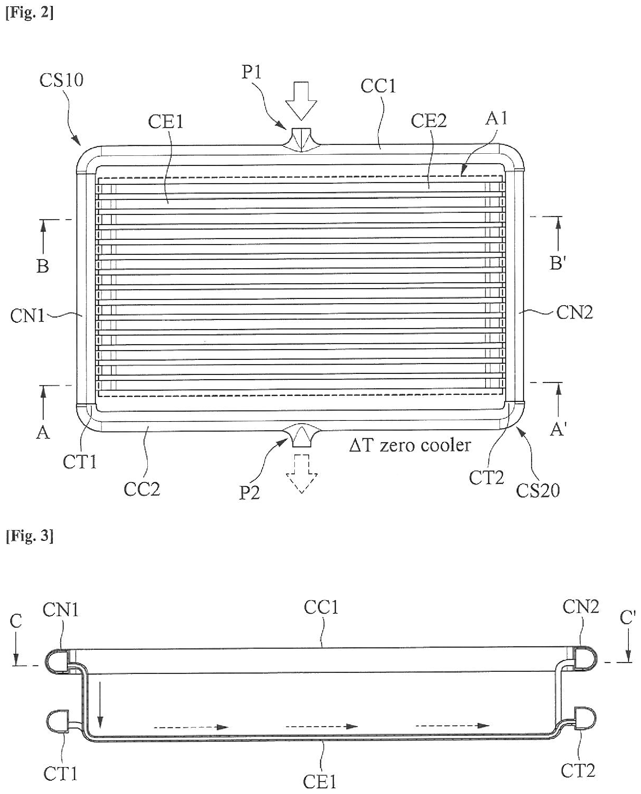

FIG. 2 is a plan view of the heat exchanger according to the embodiment of FIG. 1.

Referring to FIG. 2, a heat exchange region A1, in which a predetermined heat exchange target object is disposed, may be defined at one surface portion (upper surface portion) of the plurality of first heat exchange channels CE1 and the plurality of second heat exchange channels CE2.

FIG. 3 is a cross-sectional view taken along line A-A' of the heat exchanger of FIG. 2.

Referring to FIG. 3, the cross-sectional structure of the first heat exchange channel CE1 of the heat exchanger according to the embodiment can be identified. Through the first heat exchange channel CE1, the heat transfer fluid may flow in a first direction from the first connection channel portion CN1 toward the fourth connection channel portion CT2. When the heat transfer fluid is a cooling fluid, the temperature of the cooling fluid may increase due to heat exchange with the heat exchange target object as it goes from the first connection channel portion CN1 to the fourth connection channel portion CT2. Accordingly, the heat exchange performance by the heat transfer fluid may decrease as it goes from the first connection channel portion CN1 to the fourth connection channel portion CT2.

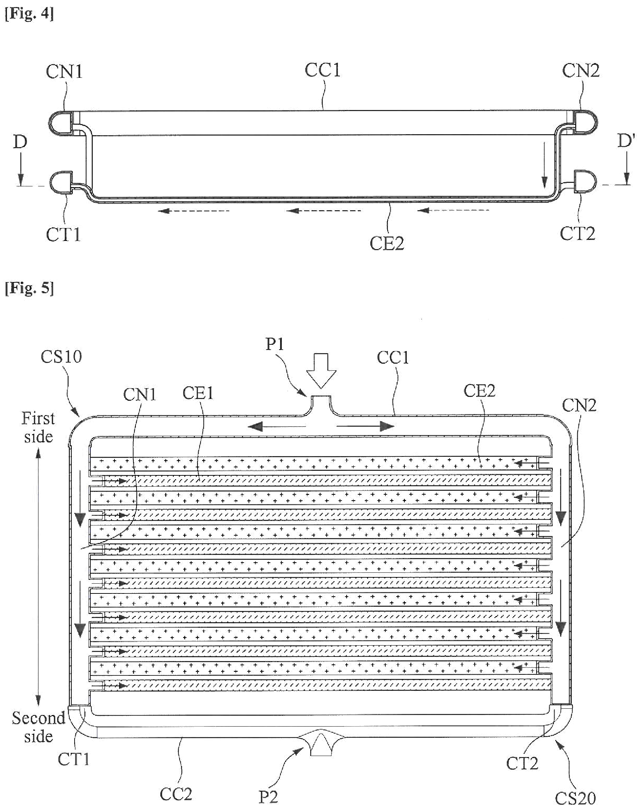

FIG. 4 is a cross-sectional view taken along line B-B' of the heat exchanger of FIG. 2.

Referring to FIG. 4, the cross-sectional structure of the second heat exchange channel CE2 of the heat exchanger according to the embodiment can be identified. Through the second heat exchange channel CE2, the heat transfer fluid may flow in a second direction from the second connection channel portion CN2 toward the third connection channel portion CT1. The second direction may be opposite to the first direction. When the heat transfer fluid is a cooling fluid, the temperature of the cooling fluid may increase due to heat exchange with the heat exchange target object as it goes from the second connection channel portion CN2 to the third connection channel portion CT1. Accordingly, the heat exchange performance by the heat transfer fluid may decrease as it goes from the second connection channel portion CN2 to the third connection channel portion CT1.

Accordingly, as shown in FIG. 2, the first and second heat exchange channels CE1 and CE2, which are alternately and repeatedly arranged, may provide a counterflow characteristic in which the heat transfer fluid flows in opposite directions in adjacent heat exchange channels.

FIG. 5 is a cross-sectional view taken along line C-C' of the heat exchanger of FIG. 3.

Referring to FIG. 5, the flow of the heat transfer fluid in the first channel structure CS10 of the heat exchanger according to the embodiment can be identified. The heat transfer fluid injected into the first port P1 may flow through the first port connection channel portion CC1 to the first and second connection channel portions CN1 and CN2. In the first connection channel portion CN1 and the second connection channel portion CN2, the heat transfer fluid may flow from the first side toward the second side.

From the first and second connection channel portions CN1 and CN2, the heat transfer fluid may flow into the plurality of first and second heat exchange channels CE1 and CE2. When the heat transfer fluid is a cooling fluid, a low-temperature cooling fluid may be supplied from both sides of the heat exchange region toward the heat exchange region. The first port P1 may be disposed at the central portion of the first port connection channel portion CC1 or a region adjacent thereto.

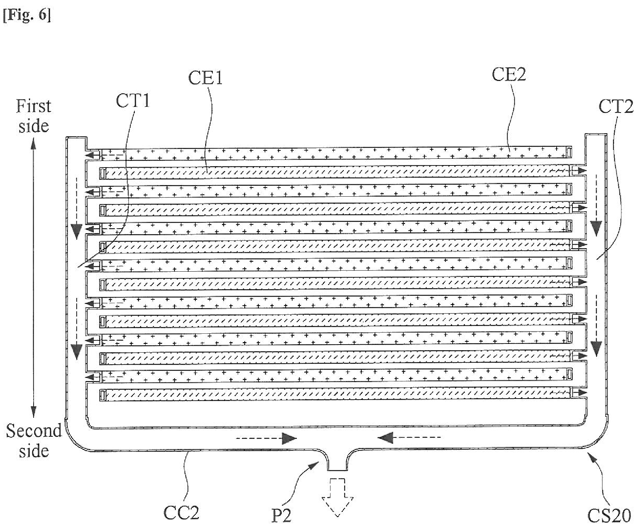

FIG. 6 is a cross-sectional view taken along line D-D' of the heat exchanger of FIG. 4.

Referring to FIG. 6, the flow of the heat transfer fluid in the second channel structure CS20 of the heat exchanger according to the embodiment can be identified. The heat transfer fluid that has passed through the plurality of first and second heat exchange channels CE1 and CE2, that is, the heat transfer fluid that has passed through the heat exchange region, may flow to the first and fourth connection channel portions CT1 and CT2, and may flow out from the first and fourth connection channel portions CT1 and CT2 through the second port connection channel portion CC2 to the second port P2. The second port P2 may be disposed at the central portion of the second port connection channel portion CC2 or a region adjacent thereto. When the heat transfer fluid is a cooling fluid, the cooling fluid whose temperature has risen while passing through the heat exchange region may be discharged through the second port P2.

Regardless of which of the plurality of first heat exchange channels CE1 the heat transfer fluid passes through, the sum of the length of the section through which the heat transfer fluid passes through the first connection channel portion CN1, the length of the section through which it passes through the first heat exchange channel CE1, and the length of the section through which it passes through the fourth connection channel portion CT2 may remain the same. Regardless of which of the plurality of second heat exchange channels CE2 the heat transfer fluid passes through, the sum of the length of the section through which the heat transfer fluid passes through the second connection channel portion CN2, the length of the section through which it passes through the second heat exchange channel CE2, and the length of the section through which it passes through the third connection channel portion CT1 may remain the same.

According to an embodiment of the present invention, since the first and second heat exchange channels CE1 and CE2, which are alternately and repeatedly arranged, can provide a counterflow characteristic in which the heat transfer fluid flows in opposite directions in adjacent heat exchange channels, the uniformity of heat distribution can be improved and the efficiency of heat exchange can be increased throughout the entire heat exchange region. As the heat transfer fluid flows in the first direction through the first heat exchange channel CE1, the heat exchange performance may gradually decrease, and as the heat transfer fluid flows in the second direction, opposite to the first direction, through the second heat exchange channel CE2, the heat exchange performance may gradually decrease, so that the uniformity of heat distribution and the uniformity of heat exchange performance can be improved overall by the counterflow. Accordingly, when cooling a heat exchange target object such as a battery, uniform cooling characteristics can be secured so that a hot spot does not occur, and as a result, the safety, durability, and lifespan of the battery can be improved. In particular, the effect of maximizing heat exchange performance with respect to a flat-type battery surface can be obtained.

According to an embodiment, the plurality of first heat exchange channels CE1 and the plurality of second heat exchange channels CE2 may all share one first port P1 and one second port P2. For each of the plurality of first heat exchange channels CE1 and the plurality of second heat exchange channels CE2, the heat transfer fluid may be injected through one first port P1 and discharged through one second port P2. In addition, according to an embodiment, the flow path lengths from the first port P1 to the second port P2 may all be the same or substantially the same for the plurality of first heat exchange channels CE1 and the plurality of second heat exchange channels CE2. Since the lengths of the branch channels may all be the same or substantially the same, the flow rate in all the channels may be the same or substantially the same. In addition, since the inlet (i.e., P1) is the same and the outlet (i.e., P2) is also the same, the flow path resistance (i.e., flow path pressure) upstream may be the same or substantially the same for all the heat exchange channels CE1 and CE2. For all the heat exchange channels CE1 and CE2, the pressure difference between the inlet (i.e., P1) and the outlet (i.e., P2) may be the same or substantially the same. Accordingly, the same flow rate can flow in all the channels, and the uniformity of heat distribution and heat exchange characteristics due to counterflow can be improved.

In addition, according to an embodiment of the present invention, a heat exchanger having high space efficiency can be implemented. In other words, it may be possible to secure excellent heat exchange performance with a planar-type heat exchanger having a relatively small volume. Accordingly, it is possible to maximize heat exchange performance with respect to a heat exchange target object (as a non-limiting example, a battery) in a flat type. In addition, the heat exchanger according to an embodiment of the present invention has the advantage of being easily manufactured at a relatively low manufacturing cost.

The flow path cross-sectional areas of the first connection channel portion CN1, the second connection channel portion CN2, the third connection channel portion CT1, and the fourth connection channel portion CT2 may vary. Of course, for ease of manufacture, the flow path cross-sectional areas of the first connection channel portion CN1, the second connection channel portion CN2, the third connection channel portion CT1, and the fourth connection channel portion CT2 may also be kept constant.

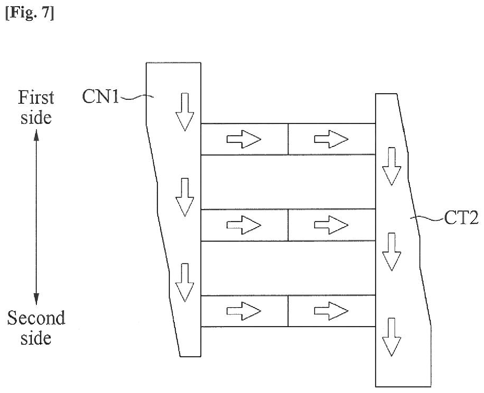

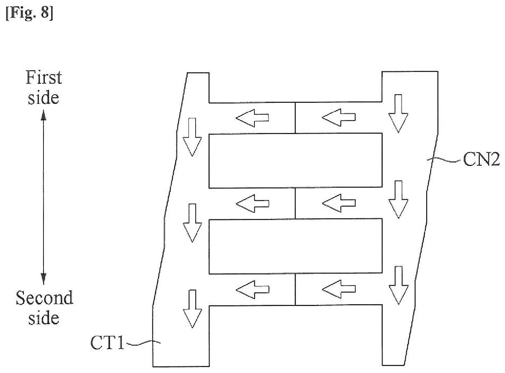

FIGS. 7 and 8 illustrate cases in which the flow path cross-sectional areas of the first connection channel portion CN1, the second connection channel portion CN2, the third connection channel portion CT1, and the fourth connection channel portion CT2 change.

Referring to FIGS. 7 and 8, the flow path cross-sectional areas of the first connection channel portion CN1 and the second connection channel portion CN2 may decrease from the first-side end toward the second-side end. In the first connection channel portion CN1 and the second connection channel portion CN2, the amount of the heat transfer fluid passing therethrough may decrease from the first-side end toward the second-side end. Since the flow path cross-sectional areas of the first connection channel portion CN1 and the second connection channel portion CN2 decrease from the first-side end toward the second-side end, the change in the flow velocity of the heat transfer fluid in the first connection channel portion CN1 and the second connection channel portion CN2 may not be large.

The flow path cross-sectional areas of the third connection channel portion CT1 and the fourth connection channel portion CT2 may decrease from the second-side end toward the first-side end. In the third connection channel portion CT1 and the fourth connection channel portion CT2, the amount of the heat transfer fluid passing therethrough may increase from the first-side end toward the second-side end. Since the flow path cross-sectional areas of the third connection channel portion CT1 and the fourth connection channel portion CT2 decrease from the second-side end toward the first-side end, the change in the flow velocity of the heat transfer fluid in the third connection channel portion CT1 and the fourth connection channel portion CT2 may not be large.

As described above, by adjusting the flow path cross-sectional areas of the first connection channel portion CN1, the second connection channel portion CN2, the third connection channel portion CT1, and the fourth connection channel portion CT2, the amount of the heat transfer fluid flowing through each of the first heat exchange channels CE1 and the second heat exchange channels CE2 can be maintained substantially constant.

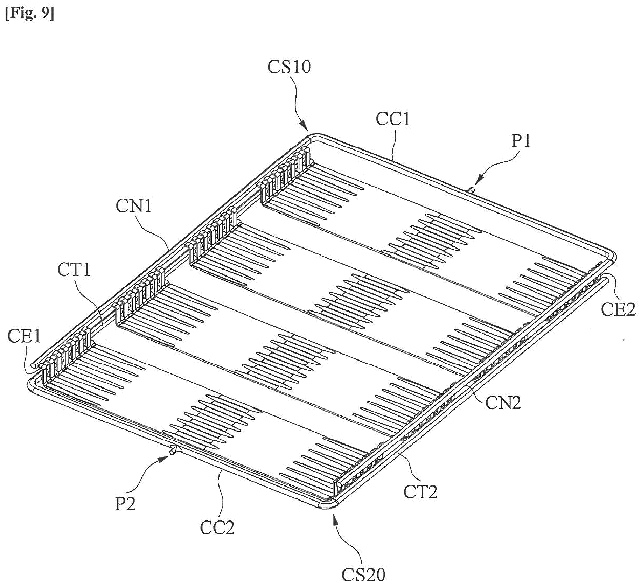

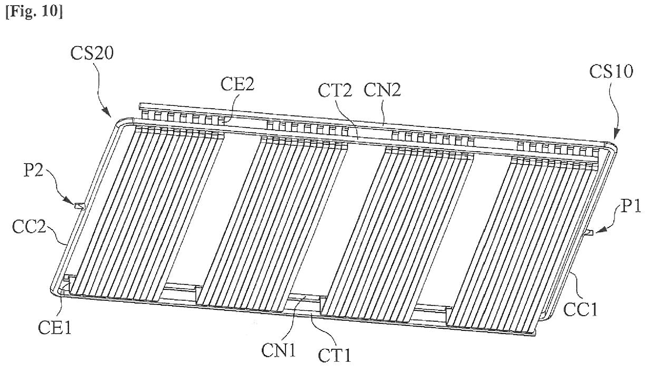

FIGS. 9 and 10 are perspective views showing a heat exchanger according to another embodiment of the present invention. FIG. 9 is a perspective view of the heat exchanger as viewed from above, and FIG. 10 is a perspective view as viewed from below.

Referring to FIGS. 9 and 10, the heat exchanger according to the present embodiment may have a configuration and characteristics similar to those described with reference to FIGS. 1 to 5. The reference numerals of FIGS. 9 and 10 may be the same as or correspond to those described with reference to FIGS. 1 to 5.

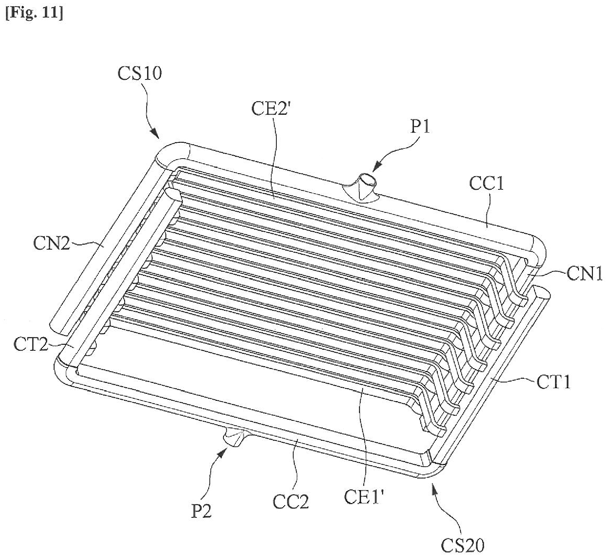

The heat exchanger of FIGS. 9 and 10 may be, as a non-limiting example, a heat exchanger for cooling a battery pack. In the heat exchanger, the plurality of first heat exchange channels CE1 and the plurality of second heat exchange channels CE2 may be arranged to form a plurality of groups, and the plurality of groups may be spaced apart from each other in a horizontal direction. The plurality of groups may be arranged to form a row, and a predetermined empty space may be provided between the plurality of groups. A relatively large-sized battery pack or the like can be cooled by the heat exchanger. However, the specific structure of the heat exchanger shown in FIG. 11 is merely exemplary, and the heat exchange target object applied thereto is not limited to a battery pack either.

FIG. 11 is a perspective view of a heat exchanger according to an embodiment of the present invention, as viewed from below.

Referring to FIG. 11, the heat exchanger according to the present embodiment may include a first channel structure CS10, a second channel structure CS20, and a plurality of heat exchange channels CE1' and CE2'. The first channel structure CS10 and the second channel structure CS20 may each have the same structure as the first channel structure CS10 and the second channel structure CS20 described with reference to FIG. 1. The first channel structure CS10 may include a first port connection channel portion CC1 connected to a first port P1 corresponding to an inlet through which the heat transfer fluid is injected, and first and second connection channel portions CN1 and CN2 respectively extending from first and second portions of the first port connection channel portion CC1. The second channel structure CS20 may include first and fourth connection channel portions CT1 and CT2 respectively extending from first and second portions of a second port connection channel portion CC2 connected to a second port P2 corresponding to an outlet through which the heat transfer fluid is discharged. The heat exchanger may include a plurality of first heat exchange channels CE1' arranged to connect the first connection channel portion CN1 and the fourth connection channel portion CT2, and a plurality of second heat exchange channels CE2 arranged to connect the second connection channel portion CN2 and the third connection channel portion CT1. At least some of the plurality of first heat exchange channels CE1' and at least some of the plurality of second heat exchange channels CE2 may be alternately arranged so as to be configured to provide a counterflow characteristic of the heat transfer fluid.

In the present embodiment, the plurality of first heat exchange channels CE1' and the plurality of second heat exchange channels CE2' may have a structure that is bent upward and extends with respect to the second channel structure CS20. A heat exchange region may be defined at the lower surface portions of the plurality of first heat exchange channels CE1' and the plurality of second heat exchange channels CE2', and the heat exchange region may perform heat exchange with respect to an upper surface of the heat exchange target object. A predetermined heat exchange target object may be disposed below the heat exchange region, and heat exchange may occur at the upper surface of the heat exchange target object. Accordingly, the heat exchanger of FIG. 11 may be a device for upper-surface heat exchange.

FIG. 12 is a perspective view showing a heat exchanger according to an exemplary embodiment of the present invention.

Referring to FIG. 12, a plurality of first heat exchange channels CE1 may connect between the first connection channel portion CN1 and the third connection channel portion CT1, A plurality of second heat exchange channels CE2 may connect between the second connection channel portion CN2 and the fourth connection channel portion CT2. Each of the plurality of first heat exchange channels CE1 may have a "U"-shaped configuration. For example, each of the plurality of first heat exchange channels CE1 may extend from the first connection channel portion CN1 in a first direction, and then be bent near the center of the heat exchanger to extend in a second direction (a direction toward the third connection channel portion CT1). Each of the plurality of second heat exchange channels CE2 may have a "U"-shaped configuration. For example, each of the plurality of second heat exchange channels CE2 may extend from the second connection channel portion CN2 in the second direction, and then be bent near the center of the heat exchanger to extend in the first direction (a direction toward the fourth connection channel portion CT2).

The heat transfer fluid introduced into the first connection channel portion CN1 may be branched into the plurality of first heat exchange channels CE1 and then merged at the third connection channel portion CT1 to be discharged through the second port P2. The heat transfer fluid introduced into the second connection channel portion CN2 may be branched into the plurality of second heat exchange channels CE2 and then merged at the fourth connection channel portion CT2 to be discharged through the second port P2.

FIG. 13 shows a modified example of the heat exchanger shown in FIG. 12.

Referring to FIG. 13, each of the first heat exchange channel CE1 and the second heat exchange channel CE2 may have a "W" shape. The first heat exchange channel CE1 may be connected to the first connection channel portion CN1 at two points and connected to the third connection channel portion CT1 at one point. The first heat exchange channel CE1 may also be connected to the first connection channel portion CN1 at one point and connected to the third connection channel portion CT2 at two points. The second heat exchange channel CE2 may be connected to the second connection channel portion CN2 at two points and connected to the fourth connection channel portion CT2 at one point. The second heat exchange channel CE2 may also be connected to the second connection channel portion CN2 at one point and connected to the fourth connection channel portion CT2 at two points.

According to an embodiment, the flow path lengths from the first port P1 to the second port P2 may all be the same or substantially the same for the plurality of first heat exchange channels CE1 and the plurality of second heat exchange channels CE2. Since the lengths of the branch channels may all be the same or substantially the same, the flow rate in all the channels may be the same or substantially the same. In addition, since the inlet (i.e., P1) is the same and the outlet (i.e., P2) is also the same, the flow path resistance (i.e., flow path pressure) upstream may be the same or substantially the same for all the heat exchange channels CE1 and CE2.

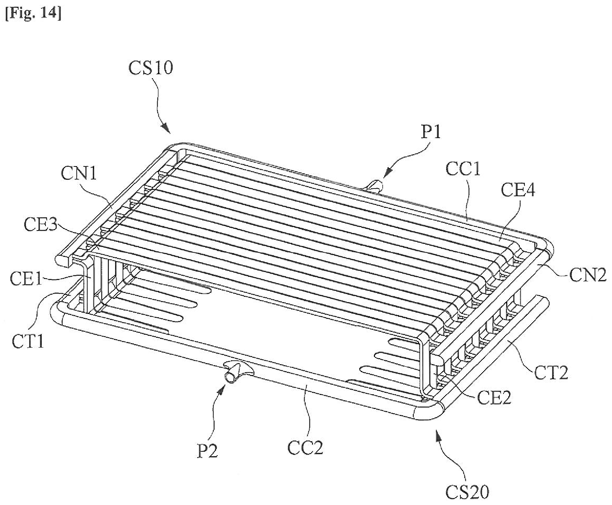

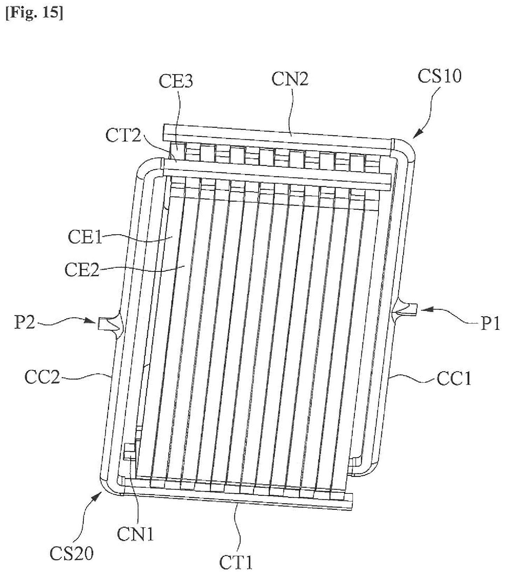

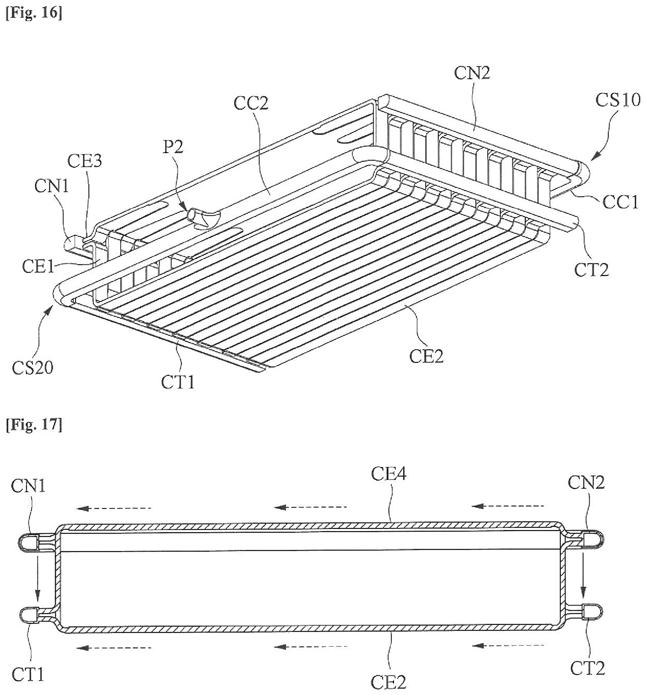

FIGS. 14 to 16 are perspective views showing a heat exchanger according to another embodiment of the present invention. FIG. 14 is a perspective view of the heat exchanger as viewed from above, and FIGS. 15 and 16 are perspective views as viewed from below.

Referring to FIGS. 14 to 16, the heat exchanger according to the present embodiment may be a device for double-sided heat exchange. In other words, the heat exchanger may be configured to perform double-sided heat exchange (for example, double-sided cooling) with respect to a heat exchange target object.

The heat exchanger may include a first channel structure CS10, a second channel structure CS20, a plurality of first heat exchange channels CE1, and a plurality of second heat exchange channels CE2. The first channel structure CS10, the second channel structure CS20, the plurality of first heat exchange channels CE1, and the plurality of second heat exchange channels CE2 may each be the same as or similar to those described with reference to FIGS. 1 to 9.

The heat exchanger may further include a plurality of third heat exchange channels CE3 arranged to connect the first connection channel portion CN1 and the fourth connection channel portion CT2, and a plurality of fourth heat exchange channels CE4 arranged to connect the second connection channel portion CN2 and the third connection channel portion CT1. At least some of the plurality of third heat exchange channels CE3 and at least some of the plurality of fourth heat exchange channels CE4 may be alternately arranged so as to be configured to provide a counterflow characteristic of the heat transfer fluid. The plurality of third heat exchange channels CE3 and the plurality of fourth heat exchange channels CE4 may be alternately arranged along the longitudinal direction (extension direction) of the first and fourth connection channel portions CT1 and CT2. In addition, the plurality of third heat exchange channels CE3 and the plurality of fourth heat exchange channels CE4 may be alternately arranged along the longitudinal direction (extension direction) of the first and second connection channel portions CN1 and CN2. A main region (most of the region) of the plurality of third heat exchange channels CE3 and a main region (most of the region) of the plurality of fourth heat exchange channels CE4 may be arranged side by side and alternately on one plane. The plurality of third heat exchange channels CE3 and the plurality of fourth heat exchange channels CE4 may be arranged to provide a planar heat exchange region.

The plurality of first heat exchange channels CE1 and the plurality of second heat exchange channels CE2 may be arranged to define a first heat exchange region at a position lower than the first channel structure CS10, and the plurality of third heat exchange channels CE3 and the plurality of fourth heat exchange channels CE4 may be arranged to define a second heat exchange region at a position higher than the second channel structure CS20. The first and second heat exchange regions may be planar heat exchange regions. A predetermined heat exchange target object may be disposed between the first and second heat exchange regions. The heat exchanger may perform heat exchange with respect to a lower surface and an upper surface of the heat exchange target object.

FIG. 17 is a cross-sectional view of the heat exchanger shown in FIGS. 14 to 16, as viewed from the front.

Referring to FIG. 17, the second heat exchange channel CE2 connects between the second connection channel portion CN2 and the third connection channel portion CT1, and may perform heat exchange in the first heat exchange region at the lower surface of the heat exchanger. The fourth heat exchange channel CE4 connects between the first connection channel portion CN1 and the fourth connection channel portion CT2, and may perform heat exchange in the second heat exchange region at the lower surface of the heat exchanger. Through this, the heat exchanger may have a double-sided cooling structure.

The heat exchanger shown in FIG. 17 may also perform double-sided heat exchange if it further includes a third heat exchange channel and a fourth heat exchange channel that perform heat exchange in a second heat exchange region on the upper surface of the heat exchanger. In this case, the third heat exchange channel may be disposed on the upper surface of the heat exchanger while connecting between the first connection channel portion CN1 and the third connection channel portion CT1, and the fourth heat exchange channel may be disposed on the upper surface of the heat exchanger while connecting between the second connection channel portion CN2 and the fourth connection channel portion CT2.

According to an embodiment of the present invention, when a double-sided cooling structure is applied for thermal management of a battery pack, the thermal resistance distance of a battery cell is halved compared to the application of a single-sided cooling structure, so that the maximum temperature can be lowered to, for example, about 60% level, and the maximum temperature and average temperature of each battery cell are mechanically managed uniformly, so that the thermal durability and lifespan of the battery pack can be extended, thermal runaway can be easily prevented, the energy efficiency of the battery pack can be improved, and the charging time of the battery pack can be shortened, thereby obtaining the effect of resolving inconvenience for users of an electric vehicle (EV) and the like.

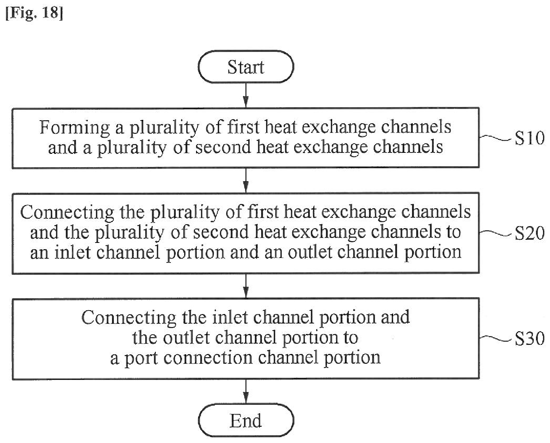

FIG. 18 is a flowchart showing a method of manufacturing the heat exchanger described with reference to FIGS. 1 to 17.

Referring to FIG. 18, the method of manufacturing the heat exchanger may include a step (S10) of forming a plurality of first heat exchange channels CE1 and a plurality of second heat exchange channels CE2. Although not shown in the drawings, in the case of a method of manufacturing a heat exchanger capable of double-sided heat exchange, a step of forming a plurality of third heat exchange channels CE3 and a plurality of fourth heat exchange channels CE4 may be further included.

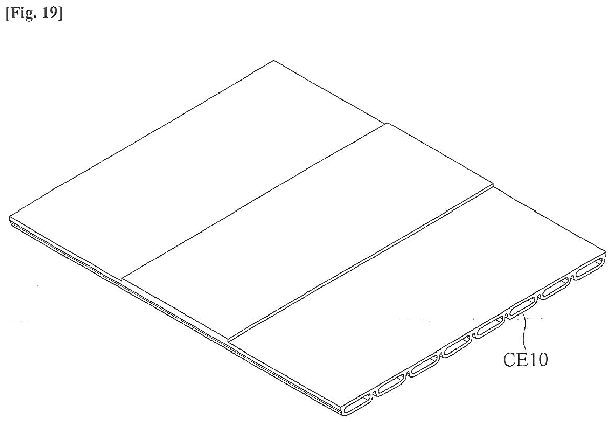

Hereinafter, a process in which the plurality of first heat exchange channels CE1 and the plurality of second heat exchange channels CE2 are formed by step S10 of FIG. 18 will be described with reference to FIGS. 19 to 22.

FIGS. 19 to 22 are views showing a process of forming a plurality of first heat exchange channels CE1 and a plurality of second heat exchange channels CE2.

Referring to FIG. 19, a structure in which a plurality of channel members CE10 are arranged adjacent to and side by side with each other may be provided. Each of the plurality of channel members CE10 may be arranged side by side so as to extend in a predetermined direction. The plurality of channel members CE10 may be arranged adjacent to each other in a direction perpendicular to the predetermined direction. The plurality of channel members CE10 may be arranged on one plane. The structure of FIG. 19 may be a kind of extrudate (extruded material). In other words, the structure of FIG. 19 may be manufactured through an extrusion process.

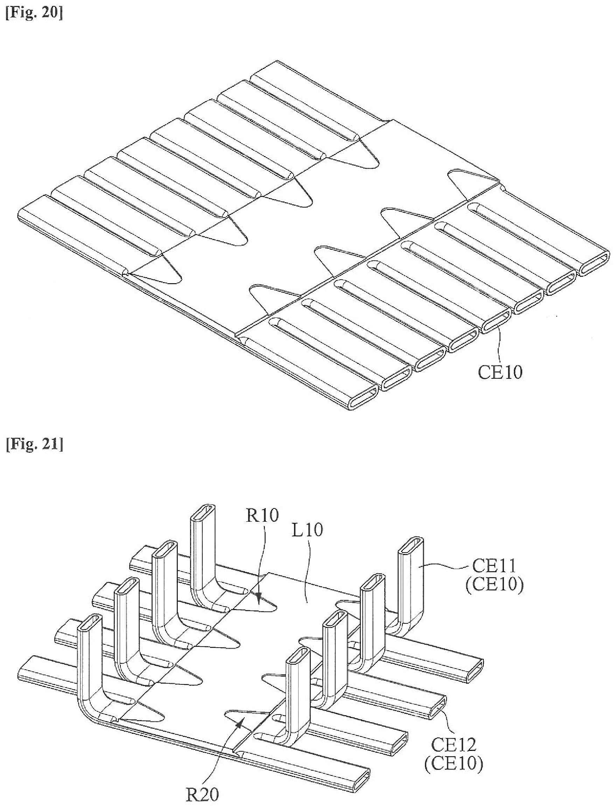

Referring to FIG. 20, portions between the plurality of channel members CE10 may be machined to form gaps between the channel members CE10. Accordingly, a gap space between the channel members CE10 can be secured. As a result, the plurality of channel members CE10 may be brought into a state in which bending is possible.

Referring to FIG. 21, a bending process (first bending process) may be performed on some of the channels CE11 among the plurality of channel members CE10. A first group of channels CE11 may be bent. The first group of channels CE11 may include odd-numbered (or even-numbered) channels at one side, and may include even-numbered (or odd-numbered) channels at the other side.

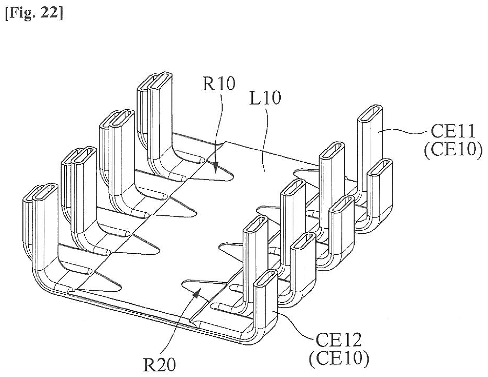

Referring to FIG. 22, a bending process (second bending process) may be performed on the other some of the channels CE12 among the plurality of channel members CE10. A second group of channels CE12 may be bent. The second group of channels CE12 may include even-numbered (or odd-numbered) channels at one side, and may include odd-numbered (or even-numbered) channels at the other side. As a non-limiting example, the odd-numbered channels may correspond to the first heat exchange channels CE1, and the even-numbered channels may correspond to the second heat exchange channels CE2.

Through the process of FIGS. 19 to 22, a heat exchange channel structure including the plurality of first heat exchange channels and the plurality of second heat exchange channels described with reference to FIG. 1 and the like can be manufactured.

Referring back to FIG. 18, in step S20, the plurality of first heat exchange channels CE1 may be connected to the first connection channel portion CN1 and any one of the third connection channel portion CT1 and the fourth connection channel portion CT2. The plurality of second heat exchange channels CE2 may be connected to the first connection channel portion CN1 and the other one of the third connection channel portion CT1 and the fourth connection channel portion CT2.

For example, in step S20, the heat exchanger shown with reference to FIGS. 1 to 11 may be manufactured by connecting the first heat exchange channel CE1 to the first connection channel portion CN1 and the fourth connection channel portion CT2, and connecting the second heat exchange channel CE2 to the second connection channel portion CN2 and the third connection channel portion CT1. As another example, the heat exchanger shown with reference to FIG. 9 may be manufactured in step S20 by connecting the first heat exchange channels CE1 to the first connection channel portion CN1 and the third connection channel portion CT1, and connecting the second heat exchange channels CE2 to the second connection channel portion CN2 and the fourth connection channel portion CT2.

In step S30, a first portion 11 of the first port connection channel portion CC1 may be connected to a first-side end of the first connection channel portion CN1. A second portion 12 of the first port connection channel portion CC1 may be connected to a first-side end of the second connection channel portion CN2.

A first portion 21 of the second port connection channel portion CC2 may be connected to a first-side end of the third connection channel portion CT1. A second portion 22 of the first port connection channel portion CC1 may be connected to a second-side end of the fourth connection channel portion CT2.

This manufacturing method may be similarly applied to manufacturing the heat exchangers described with reference to FIGS. 14 to 17.

Hereinafter, an embodiment for adjusting heat exchange characteristics by making the thermal resistance of the heat exchanger different depending on the region will be described.

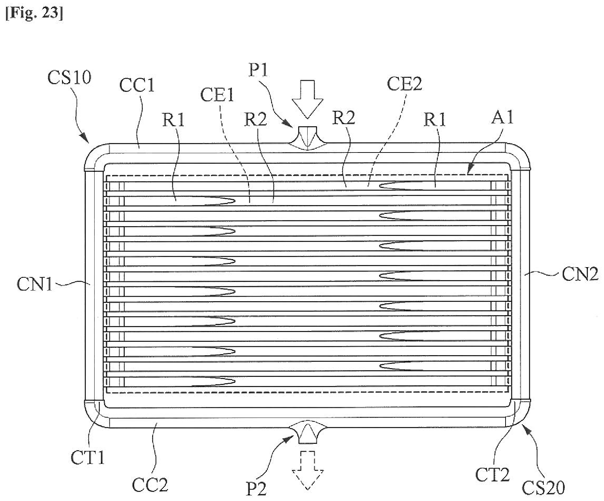

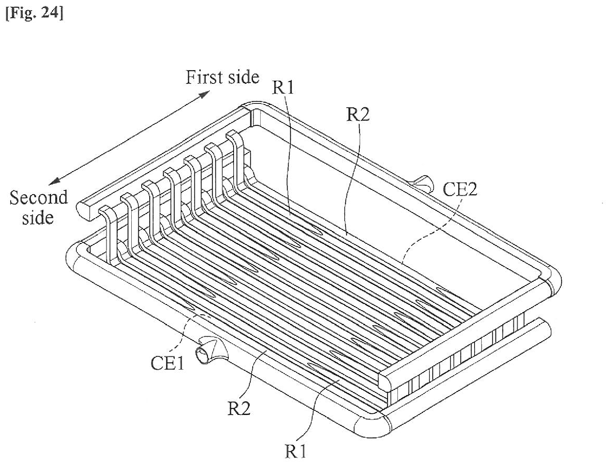

FIG. 23 is a view showing a heat exchanger according to an exemplary embodiment. FIG. 24 is a perspective view showing the heat exchanger shown in FIG. 23.

Referring to FIGS. 23 and 24, the heat exchanger may include at least one heat exchange channel CE1, CE2 that performs heat exchange with a heat exchange target object in a predetermined heat exchange region A1. According to the embodiment shown in FIGS. 23 and 24, the heat exchanger may include two heat exchange channels CE1 and CE2. With reference to FIG. 23, in the first heat exchange channel CEl, the heat transfer fluid may flow in a left-to-right direction. In the second heat exchange channel CE2, the heat transfer fluid may flow in a right-to-left direction.

In a first region R1 of the heat exchange region A1, the thermal resistance between the heat exchange channels CE1, CE2 and the heat exchange target object may be smaller than the thermal resistance between the heat exchange channels CE1, CE2 and the heat exchange target object in a second region R2 of the heat exchange region A1.

Thermal resistance may be a parameter that quantifies the degree to which heat is transferred (or the degree to which heat transfer is impeded). The thermal resistance between two different points (or two regions) may be proportional to a value obtained by dividing the temperature difference between the two points (or two regions) by the heat flow rate (the amount of heat flowing per unit time) between the two points (or two regions). Thermal resistance may be proportional to the reciprocal of thermal conductivity. The lower the thermal resistance, the more heat exchange occurs relatively, and the higher the thermal resistance, the less heat exchange may occur relatively.

Heat exchange between the heat exchange channels CE1, CE2 and the heat exchange target object may occur more readily in the second region R2 than in the first region R1. When the heat transfer fluid functions as a cooling fluid, the heat exchange channels CE1, CE2 may cool the heat exchange target object more effectively in the second region R2 than in the first region R1.

With reference to FIG. 23, in the first heat exchange channel CE1, the heat transfer fluid may flow in a left-to-right direction. On the left side of the first heat exchange channel CE1, where the heat transfer fluid is introduced, the temperature difference between the heat transfer fluid and the heat exchange target object may be relatively large. On the other hand, on the right side of the first heat exchange channel CE1, where the heat transfer fluid is discharged, the temperature difference between the heat transfer fluid and the heat exchange target object may be relatively small. Accordingly, when the thermal resistance between the first heat exchange channel CE1 and the heat exchange target object is constant, relatively more heat exchange may occur on the left side of the first heat exchange channel CE1, and relatively less heat exchange may occur on the right side of the first heat exchange channel CE1.

Similarly, on the left side of the second heat exchange channel CE2, the temperature difference between the heat exchange fluid and the heat exchange target object may be relatively small, and on the right side of the second heat exchange channel CE2, the temperature difference between the heat exchange fluid and the heat exchange target object may be relatively large. When the thermal resistance between the second heat exchange channel CE2 and the heat exchange target object is constant, relatively less heat exchange may occur on the left side of the second heat exchange channel CE2, and relatively more heat exchange may occur on the right side of the second heat exchange channel CE2.

If heat exchange occurs non-uniformly, the heat exchange efficiency decreases, and a temperature deviation may occur in the heat exchange target object, which may reduce the durability of the heat exchange target object. When the heat exchange target object is a battery, if heat exchange occurs non-uniformly, the temperatures of the battery cells may not be uniformly controlled, which may cause thermal runaway or shorten the lifespan of the battery.

According to an embodiment of the present invention, by making the thermal resistance of the first region R1 and the second region R2 different, heat exchange can occur relatively more uniformly. The first region R1 may be adjacent to a region of the heat exchange region A1 into which the heat transfer fluid is introduced. For example, in the region of the heat exchange region A1 in which the first heat exchange channel CE1 is disposed, the heat transfer fluid may be introduced from the left side and discharged to the right side. Accordingly, in the region in which the first heat exchange channel CE1 is disposed, the first region R1 may be located on the left side, and the second region R2 may be located on the right side.

In the region of the heat exchange region A1 in which the second heat exchange channel CE2 is disposed, the heat transfer fluid may be introduced from the right side and discharged to the left side. Accordingly, in the region in which the second heat exchange channel CE2 is disposed, the first region R1 may be located on the right side, and the second region R2 may be located on the left side.

In the first region R1 of the heat exchange region A1, where the temperature difference between at least one of the heat exchange channels CE1, CE2 and the heat exchange target object is large, the thermal resistance may be relatively large. In the second region R2 of the heat exchange region A1, where the temperature difference between at least one of the heat exchange channels CE1, CE2 and the heat exchange target object is small, the thermal resistance may be relatively small. By adjusting the thermal resistance, heat exchange can occur uniformly in the heat exchange region A1. According to an embodiment of the present invention, the uniformity of heat distribution can be improved and the efficiency of heat exchange can be increased throughout the entire heat exchange region. Accordingly, when cooling a heat exchange target object such as a battery, uniform cooling characteristics can be secured so that a hot spot does not occur, and as a result, the safety, durability, and lifespan of the battery can be improved.

An insulating material capable of increasing the thermal resistance between the heat exchange channels CE1, CE2 and the heat exchange target object may be disposed in the first region R1. The insulating material may be disposed in a manner of being coated on the surface of the first heat exchange channel CE1 and/or the second heat exchange channel CE2. As another example, the insulating material may be disposed on a portion of a thermal conductivity control member provided between the first heat exchange channel CE1 and/or the second heat exchange channel CE2 and the heat exchange target object. The thermal conductivity control member may include a thermally conductive medium layer that transfers heat between the heat exchange channels CE1, CE2 and the heat exchange target object. A metal having a relatively high thermal conductivity may be disposed in the second region R2 of the thermally conductive medium layer. Materials having a high thermal conductivity include metals such as copper, aluminum, silver, iron, and the like, but the embodiment is not limited thereto. An insulating material having a relatively low thermal conductivity may be disposed in the first region R1 of the thermally conductive medium layer. Materials for the insulating material include glass fiber, aerogel, silicone foam, mineral wool, and the like, but the embodiment is not limited thereto.

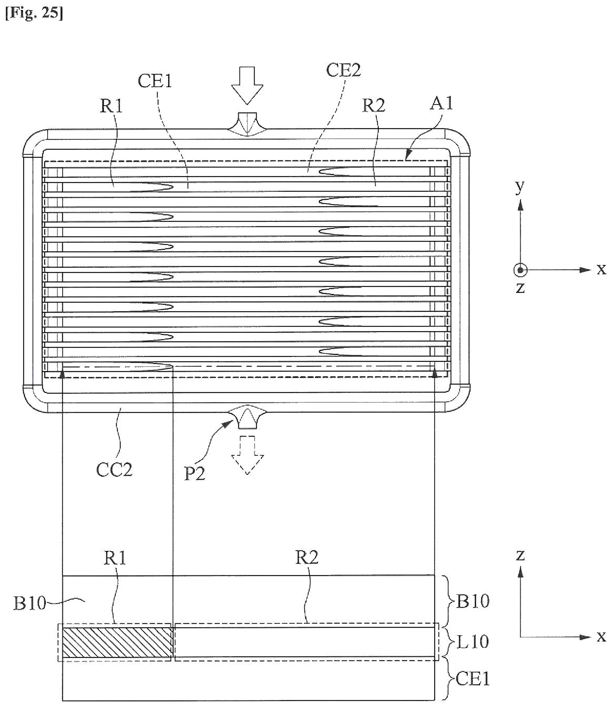

FIG. 25 is a view showing the heat exchanger shown in FIG. 23 and a cross-section (lower side) taken along line A-A' of the heat exchanger. The lower cross-section of FIG. 25 shows a heat exchange target object B10, a thermal conductivity control member L10, and a first heat exchange channel CE1.

Referring to FIG. 25, a thermal conductivity control member L10 may be provided between the first heat exchange channel CE1 and the heat exchange target object B10. The thermal conductivity control member L10 may serve as a passage through which thermal energy moves between the heat exchange channels CE1, CE2 and the heat exchange target object B10. The thermal conductivity control member L10 may include a thermally conductive medium layer. In the first region R1, the thermal resistance of the thermal conductivity control member L10 may be relatively high. In the second region R2, the thermal resistance of the thermal conductivity control member L10 may be relatively low. In the first region R1, the temperature difference between the first heat exchange channel CE1 and the heat exchange target object B10 may be relatively large, while the thermal resistance of the thermal conductivity control member L10 may be relatively high. In the second region R2, the temperature difference between the first heat exchange channel CE1 and the heat exchange target object B10 may be relatively small, while the thermal resistance of the thermal conductivity control member L10 may be relatively low.

An insulating material having a high thermal resistance may be disposed in the first region R1, and a metal material having a low thermal resistance may be disposed in the second region R2.

As another example, a metal material having a low thermal resistance (high thermal conductivity) may be disposed in the second region R2, and the first region R1 may have a void formed therein (an air medium). Since the thermal resistance of air is generally higher than that of a metal such as copper, when the first region R1 is formed as a void, the thermal resistance of the first region R1 may be greater than the thermal resistance of the second region R2.

The thermal resistance may be adjusted in various ways.

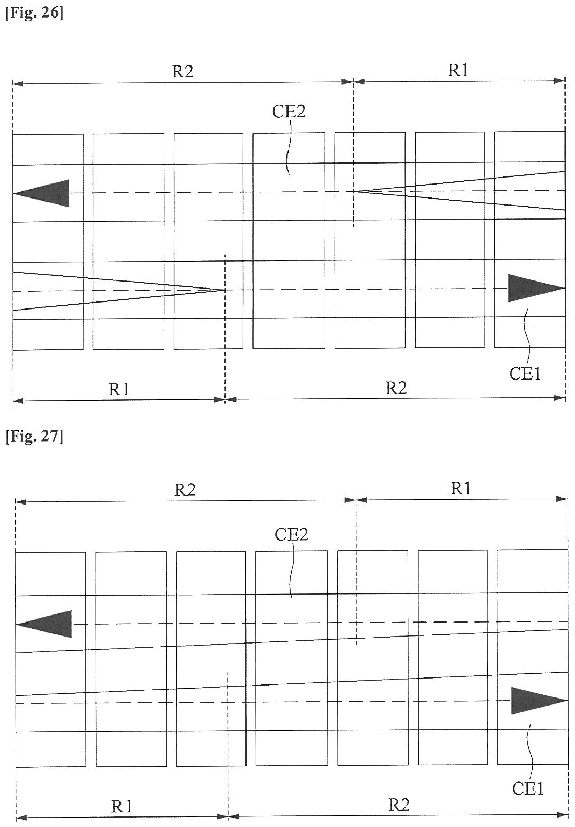

FIGS. 26 to 29 are views showing examples of adjusting thermal resistance.

Referring to FIGS. 26 to 29, in the first heat exchange channel CE1 in which the heat transfer fluid flows from left to right, a first region R1 may be formed on the left side and a second region R2 may be formed on the right side. In the second heat exchange channel CE2 in which the heat transfer fluid flows from right to left, a first region R1 may be formed on the right side and a second region R2 may be formed on the left side.

Referring to FIG. 26, an insulating material may be disposed in the first region R1. The insulating material may have a shape whose width at least partially narrows in the direction in which the heat transfer fluid flows. As the insulating material has a shape whose width narrows, the thermal resistance may gradually change in the flow direction of the heat transfer fluid even within the first region R1. The effect of the gradually changing temperature of the heat transfer fluid, even within the first region R1, can be offset using the thermal resistance. As the insulating material has a shape whose width narrows, heat exchange can occur more uniformly.

Referring to FIG. 27, in the first region R1, the width (or heat exchange cross-sectional area) of the first heat exchange channel CE1 and the second heat exchange channel CE2 may be smaller than in the second region R2. Since the width (or heat exchange cross-sectional area) of the first heat exchange channel CE1 and the second heat exchange channel CE2 in the first region R1 is relatively small, heat exchange may occur to a limited extent accordingly. As a result, the thermal resistance of the first region R1 may be greater than the thermal resistance of the second region R2.

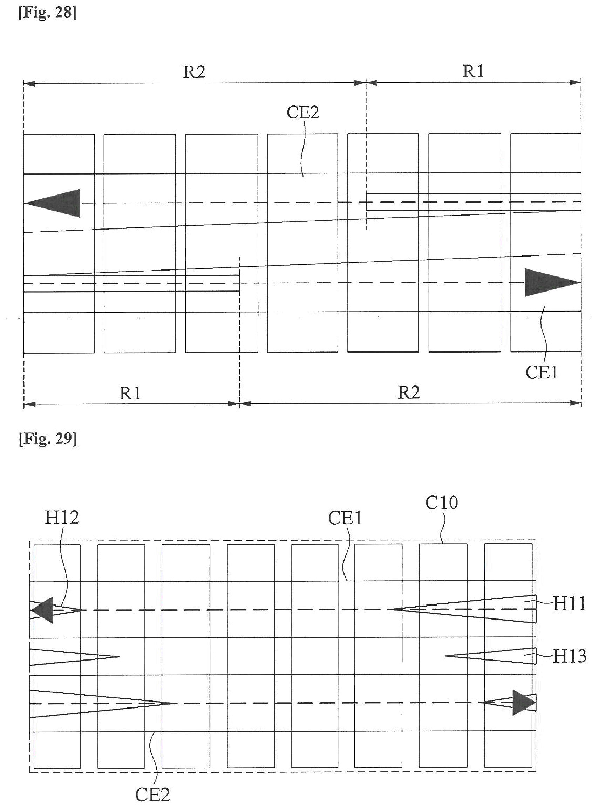

Referring to FIG. 28, the method using the insulating material shown in FIG. 5a and the method using the width (or heat exchange cross-sectional area) of the heat exchange channels CE1, CE2 may be used in combination. The method using the insulating material may also be replaced by the above-described method using a void. Referring to FIG. 5c, in the first region R1, the width (or heat exchange cross-sectional area) of the heat exchange channels CE1, CE2 may be relatively small, and a material having a relatively high thermal resistance may be used for the thermal conductivity control member.

Referring to FIG. 29, the first heat exchange channel CE1 and the second heat exchange channel CE2 may perform heat exchange with respect to a plurality of battery cells C10. A first region having a high thermal resistance may be formed in the region of the first heat exchange channel CE1 into which the heat exchange fluid is introduced. An insulating material H10 may be disposed in the region of the first heat exchange channel CE1 into which the heat exchange fluid is introduced. A first region having a high thermal resistance may be formed not only in the region of the first heat exchange channel CE1 into which the heat exchange fluid is introduced, but also at the end from which the heat exchange fluid is discharged. That is, an insulating material H11 may also be disposed in the region of the first heat exchange channel CE1 from which the heat exchange fluid is discharged. Similarly, in the second heat exchange channel CE2, an insulating material may be disposed not only in the region into which the heat exchange fluid is introduced, but also at the end from which the heat exchange fluid is discharged. In addition, an insulating material H13 may be additionally provided in the region between the first heat exchange channel CE1 and the second heat exchange channel CE2.

The insulating material H10 may be a void for increasing the thermal resistance, or may be another type of thermal resistance structure implemented by reducing the cross-sectional area of the first heat exchange channel CE1.

As shown in FIG. 29, by distributing and disposing the thermal resistance structures also in the vertical direction of FIG. 29, the vertical temperature deviation of the battery cells C10 can be reduced.

The heat exchanger including thermal resistance has been described with reference to FIGS. 26 to 29. The shape of the heat exchanger to which thermal resistance is applied may be variously changed.

For example, according to the embodiment shown in FIG. 12, the heat transfer fluid may be introduced from the first connection channel portion CN1 into the first heat exchange channel CE1, and the heat transfer fluid may be introduced from the second connection channel portion CN2 into the second heat exchange channel CE2. Accordingly, the portion of the "U"- shaped first heat exchange channel CE1 adjacent to the portion connected to the first connection channel portion CN1 may become a first region R1. In addition, the portion of the "U"-shaped second heat exchange channel CE2 adjacent to the portion connected to the second connection channel portion CN2 may become a first region R1.

According to the embodiment shown in FIG. 13, the heat transfer fluid may be introduced from the first connection channel portion CN1 into the first heat exchange channel CE1, and the heat transfer fluid may be introduced from the second connection channel portion CN2 into the second heat exchange channel CE2. Accordingly, the portions of the "W"-shaped first heat exchange channel CE1 adjacent to both end portions connected to the first connection channel portion CN1 may become a first region R1. In addition, the portions of the "W"-shaped second heat exchange channel CE2 adjacent to both end portions connected to the second connection channel portion CN2 may become a first region R1.

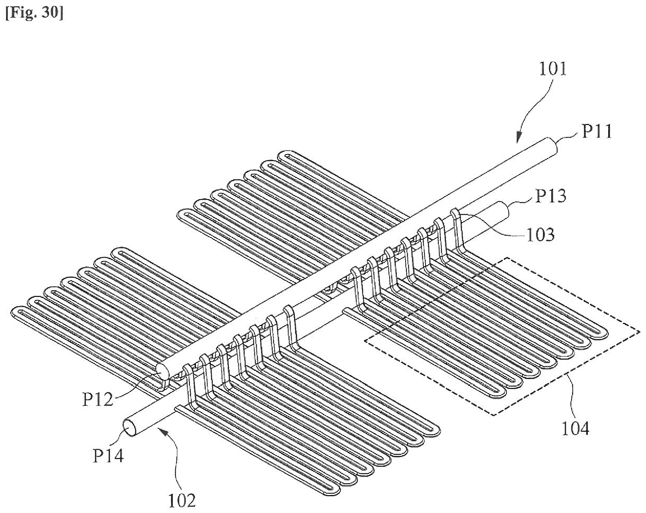

FIG. 30 is a view showing a heat exchanger according to another exemplary embodiment.

Referring to FIG. 30, the heat exchanger may include an inlet rail channel 101 through which the heat transfer fluid is introduced from the outside, an outlet rail channel 102 through which the heat transfer fluid flows out to the outside, a heat exchange channel 103, which is a tubular passage branching from the inlet rail channel 101 and connected to the outlet rail channel 102, and a heat exchange region 104, which is a portion composed of a plurality of heat exchange channels 103 through which the heat transfer fluid moves and exchanges heat.

The heat transfer fluid may be introduced from outside the heat exchanger into the inlet rail channel 101.

For example, the heat transfer fluid may be introduced into a port P11 of the inlet rail channel 101. The heat transfer fluid introduced into the port P11 may move along the inlet rail channel 101 and then branch into the plurality of heat exchange channels 103.

The heat transfer fluid introduced into the inlet rail channel 101 may be delivered to the heat exchange channels 103. A plurality of heat exchange channels 103 may be formed between the inlet rail channel 101 and the outlet rail channel 102. The heat exchange channels 103 may extend from the inlet rail channel 101 and be connected to the outlet rail channel 102 while having a U-turn shape by bending. Although FIG. 30 shows that the heat exchange channels 103 have a "U" shape, the embodiment is not limited thereto. For example, the heat exchange channels 103 may have an "m" shape or a "W" shape as shown in FIG. 13. For example, each of the heat exchange channels 103 may be connected to the inlet rail channel 101 through one line, branch at the edge, and then branch into two pipes to be connected to the outlet rail channel 103 at two locations. As another example, each of the heat exchange channels 103 may be connected to the inlet rail channel 101 through two lines, merge at the edge, and then be connected to the outlet rail channel 103 at one location.

FIG. 30 shows a case in which the heat exchange channels 130 are formed on both sides of the inlet rail channel 101. However, the embodiment is not limited thereto. The heat exchange channels 130 may be formed only on one side (or in one direction) of the inlet rail channel 101.

The heat transfer fluid that has passed through the heat exchange channels 103 formed on both sides of the inlet rail channel 101 may merge at the outlet rail channel 103. The heat transfer fluid merged at the outlet rail channel 103 may be discharged through a port P14.

As another example, the heat transfer fluid may be introduced into a port P12 of the inlet rail channel 101. The heat transfer fluid that has passed through the heat exchange channels 103 formed on both sides of the inlet rail channel 101 may merge at the outlet rail channel 103. The heat transfer fluid merged at the outlet rail channel 103 may also be discharged through a port P13.

In the case of the embodiment shown in FIG. 30, the region of the heat exchange channels 103 close to the portion connected to the inlet rail channel 101 may correspond to a first region R1.

According to the embodiment shown in FIG. 30, the heat transfer fluid introduced through a port formed at one side of the inlet rail channel may perform heat exchange while passing through the heat exchange channels. The flow of the heat exchange fluids in the heat exchange channels may form a counterflow, so that uniform heat exchange can be achieved. In addition, the heat transfer fluid may be discharged to the other side of the outlet rail channel 103.

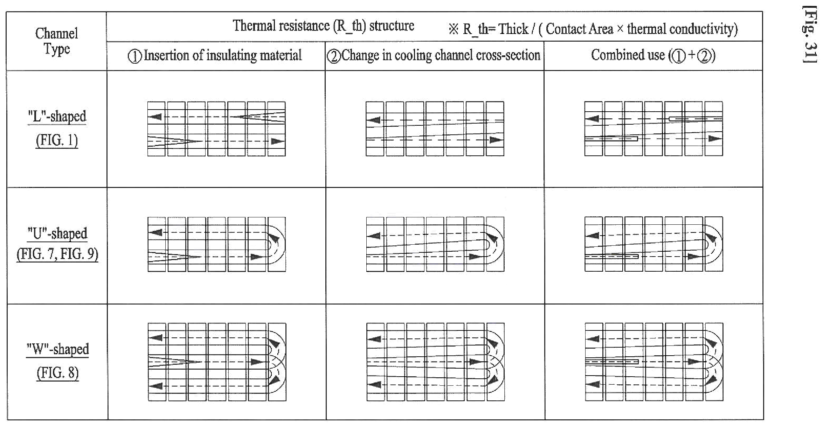

FIG. 31 is a table summarizing examples in which thermal resistance is applied to various heat exchangers.

Referring to FIG. 31, regardless of a change in the structure of the heat exchanger, a region in which the temperature difference between the heat transfer fluid and the heat exchange target object is large may be set as a first region R1 for the uniformity of heat exchange. By making the thermal resistance of the first region R1 greater than that of the second region R2, heat exchange can occur uniformly.

According to an embodiment of the present invention, a plurality of heat exchange channels provided in parallel can be easily manufactured using an extrudate (extruded material) that is inexpensive to manufacture. In the case of a conventional battery cooler, since it is manufactured using a large press mold and a large brazing furnace, manufacturing may be difficult and the manufacturing cost may be quite high. However, according to an embodiment of the present invention, a heat exchange channel structure can be manufactured through machining of an extrudate (extruded material), which has a significantly low manufacturing cost due to mass production, and a heat exchanger can be easily manufactured therefrom.

According to an embodiment of the present invention, it is possible to overcome the problems of the conventional heat exchanger described above, and to implement a heat exchanger capable of realizing uniform and excellent heat distribution and heat exchange characteristics. According to the above-described embodiments of the present invention, a heat exchanger capable of improving the uniformity of heat distribution and increasing the efficiency of heat exchange can be implemented. In addition, according to an embodiment of the present invention, a heat exchanger capable of increasing space efficiency and maximizing heat exchange performance with respect to a heat exchange target object (as a non-limiting example, a battery) in a flat type can be implemented. In addition, according to an embodiment of the present invention, a heat exchanger that can be easily manufactured at a relatively low manufacturing cost can be implemented.

According to an embodiment of the present invention, by using heat exchange channels to which a close counterflow is applied, which can improve the uniformity of heat distribution, it is possible to overcome a problem that could not be solved by conventional heat exchange devices, that is, the difficult problem of securing thermal management uniformity for a heating element having a large area and generating heat uniformly, and to obtain the effect of optimizing the uniformity of heat exchange.

According to an embodiment of the present invention, the uniformity of heat distribution and the uniformity of heat exchange performance can be improved using thermal resistance. Accordingly, when cooling a heat exchange target object such as a battery, uniform cooling characteristics can be secured so that a hot spot does not occur, and as a result, the safety, durability, and lifespan of the battery can be improved. In particular, the effect of maximizing heat exchange performance with respect to a flat-type battery surface can be obtained.

According to an embodiment of the present invention, when a double-sided cooling structure is applied for thermal management of a battery pack, the thermal resistance distance of a battery cell is halved compared to the application of a single-sided cooling structure, so that the maximum temperature can be lowered to, for example, about 60% level, and the maximum temperature and average temperature of each battery cell are mechanically managed uniformly, so that the thermal durability and lifespan of the battery pack can be extended, thermal runaway can be easily prevented, the energy efficiency of the battery pack can be improved, and the charging time of the battery pack can be shortened, thereby obtaining the effect of resolving inconvenience for users of an electric vehicle (EV).

Preferred embodiments of the present invention have been disclosed herein, and although specific terms have been used, they have been used only in a general sense to easily explain the technical content of the present invention and to aid understanding of the invention, and are not intended to limit the scope of the present invention. It will be apparent to a person having ordinary skill in the art to which the present invention pertains that other modifications based on the technical spirit of the present invention are possible in addition to the embodiments disclosed herein. For example, a person having ordinary skill in the art will appreciate that the heat exchanger, its manufacturing method, and the device including the heat exchanger according to the embodiments described with reference to FIGS. 1 to 30 may be variously changed. Therefore, the scope of the invention should not be determined by the described embodiments, but should be determined by the technical spirit described in the claims.

## Claims

1. A heat exchanger that performs heat exchange using a flow of a heat transfer fluid, comprising at least one heat exchange channel that performs heat exchange with a heat exchange target object in a predetermined heat exchange region, wherein a thermal resistance between the at least one heat exchange channel and the heat exchange target object in a first region of the heat exchange region is different from a thermal resistance between the at least one heat exchange channel and the heat exchange target object in a second region of the heat exchange region.

2. The heat exchanger of claim 1, further comprising: a first port connection channel portion in which a first port through which the heat transfer fluid is injected is formed; a first connection channel portion extending from a first portion of the first port connection channel portion; a second connection channel portion extending from a second portion of the first port connection channel portion; a second port connection channel portion in which a second port through which the heat transfer fluid is discharged is formed; a third connection channel portion extending from a first portion of the second port connection channel portion; and a fourth connection channel portion extending from a second portion of the second port connection channel portion, wherein the at least one heat exchange channel comprises a plurality of first heat exchange channels arranged to connect the first connection channel portion to any one of the third connection channel portion and the fourth connection channel portion, and a plurality of second heat exchange channels arranged to connect the second connection channel portion to the other one of the third connection channel portion and the fourth connection channel portion, wherein the first port connection channel portion is connected to first-side ends of the first connection channel portion and the second connection channel portion, and the second port connection channel portion is connected to second-side ends, different from the first side, of the third connection channel portion and the fourth connection channel portion.

3. The heat exchanger of claim 1, further comprising a first rail channel and a second rail channel, wherein the at least one heat exchange channel is connected to the first rail channel and the second rail channel and comprises channels having at least one of a "U" shape and a "W" shape, wherein a heat transfer fluid introduced from a port formed at one side of the first rail channel is branched into the channels having at least one of the "U" shape and the "W" shape and then discharged through a port formed at the other side of the second rail channel.

4. The heat exchanger of claim 2, wherein the plurality of first heat exchange channels connect between the first connection channel portion and the fourth connection channel portion, and the plurality of second heat exchange channels connect between the second connection channel portion and the third connection channel portion.

5. The heat exchanger of claim 4, wherein at least some of the plurality of first heat exchange channels and at least some of the plurality of second heat exchange channels are alternately arranged so as to be configured to provide a counterflow characteristic of the heat transfer fluid.

6. The heat exchanger of claim 4, wherein the heat transfer fluid introduced into the first connection channel portion is branched into the plurality of first heat exchange channels and then merged at the fourth connection channel portion to be discharged through the second port, and the heat transfer fluid introduced into the second connection channel portion is branched into the plurality of second heat exchange channels and then merged at the third connection channel portion to be discharged through the second port.

7. The heat exchanger of claim 2, wherein the plurality of first heat exchange channels connect between the first connection channel portion and the third connection channel portion, and the plurality of second heat exchange channels connect between the second connection channel portion and the fourth connection channel portion.

8. The heat exchanger of claim 7, wherein each of the plurality of first heat exchange channels has a "U"-shaped structure extending from the first connection channel portion and then bent to extend toward the third connection channel portion, and each of the plurality of second heat exchange channels has a "U"-shaped structure extending from the second connection channel portion and then bent to extend toward the fourth connection channel portion.

9. The heat exchanger of claim 7, wherein the heat transfer fluid introduced into the first connection channel portion is branched into the plurality of first heat exchange channels and then merged at the third connection channel portion to be discharged through the second port, and the heat transfer fluid introduced into the second connection channel portion is branched into the plurality of second heat exchange channels and then merged at the fourth connection channel portion to be discharged through the second port.

10. The heat exchanger of claim 2, further comprising: a plurality of third heat exchange channels arranged to connect the first connection channel portion to any one of the third connection channel portion and the fourth connection channel portion; and a plurality of fourth heat exchange channels arranged to connect the second connection channel portion to the other one of the third connection channel portion and the fourth connection channel portion, wherein the plurality of first heat exchange channels and the plurality of second heat exchange channels are arranged to define a first heat exchange region, and the plurality of third heat exchange channels and the plurality of fourth heat exchange channels are arranged to define a second heat exchange region at a position different from the first heat exchange channel, and a predetermined heat exchange target object is disposed between the first heat exchange region and the second heat exchange region.

11. The heat exchanger of claim 2, wherein a flow path cross-sectional area of the first connection channel portion and the second connection channel portion decreases from the first-side end toward the second-side end, and a flow path cross-sectional area of the third connection channel portion and the fourth connection channel portion increases from the first-side end toward the second-side end.

12. The heat exchanger of claim 1, wherein an insulating material having a thermal resistance higher than that of the second region is inserted in the first region.

13. The heat exchanger of claim 1, wherein a surface area of the at least one heat exchange channel in the first region is smaller than a surface area thereof in the second region.

14. The heat exchanger of claim 1, wherein a thermal conductivity control member is provided between the at least one heat exchange channel and the heat exchange target object, and the thermal conductivity control member has a relatively high thermal resistance in the first region and a relatively low thermal resistance in the second region.

15. The heat exchanger of claim 1, wherein a thermal resistance between the at least one heat exchange channel and the heat exchange target object in the first region of the heat exchange region is higher than a thermal resistance between the at least one heat exchange channel and the heat exchange target object in the second region of the heat exchange region, and the first region is adjacent to a region into which the heat transfer fluid is introduced.
